# FASCICULE DE BREVET EUROPEEN

(11) **EP 1 972 479 B1**
(45) Date de publication et mention de la délivrance du brevet: **12.01.2011**
(21) Numéro de dépôt: 08151771.6
(22) Date de dépôt: 21.02.2008
(51) Int. Cl.: B60J 7/047, B60J 7/14

(54) **véhicule automobile du type découvrable**
Kraftfahrzeug mit Klappdach
Motor vehicle with folding roof

(30) Priorité: 19.03.2007 FR 0753902
(43) Date de publication de la demande: 24.09.2008
(73) Titulaire: Peugeot Citroën Automobiles SA, 78943 Vélizy-Villacoublay Cedex (FR)
(72) Inventeur: GILLERON, Philippe, 92400, COURBEVOIE (FR); JOURDAN, Dominique, 27700, HEUQUEVILLE (FR)
(74) Mandataire: Allain, Laurent

(56) Documents cités:
- WO-A-03/076220
- DE-A1- 10 144 001
- FR-A- 2 845 950
- FR-A- 2 865 162
- GB-A- 2 240 519
- US-A- 5 558 388

## Description

La présente invention concerne un véhicule automobile du type découvrable.

Le brevet FR2845950A divulgue un véhicule automobile du type découvrable comprenant un pavillon formé d'au moins deux panneaux rigides, et mobiles entre une position de recouvrement de l'habitacle du véhicule et une position de rangement dans laquelle ils sont rangés dans le coffre arrière du véhicule.

On connaît des véhicules automobiles munis d'un module de recouvrement amovible de l'habitacle comprenant, pour chaque côté latéral du véhicule, une ridelle de pavillon constituée par une pièce en forme d'arceau fixée sur la structure du véhicule. Chaque ridelle supporte une cassette formant une lunette arrière du véhicule et un dispositif de toit souple susceptible de coulisser entre deux positions extrêmes respectivement une position repliée sur la cassette et une position dépliée recouvrant l'habitacle. La cassette est apte à être démontée et rangée dans le véhicule dans la position extrême correspondant à la position repliée du toit souple.

On connaît également des véhicules automobiles dont le pavillon comporte un ou plusieurs panneaux de toit rigides, éventuellement en verre, déplaçables manuellement ou automatiquement entre une position déployée de couverture de l'habitacle et une position plus ou moins escamotée pour découvrir l'habitacle en fonction des conditions climatiques extérieures.

Dans la position escamotée des panneaux de toit, l'ensemble est déplaçable par basculement à l'intérieur d'un compartiment de coffre, soit dans une position sensiblement verticale derrière la rangée de sièges arrière, soit dans une position sensiblement horizontale à la partie supérieure du compartiment de coffre. En position escamotée sensiblement horizontale dans le compartiment de coffre, les panneaux de toit sont retournés de 180°.

D'une manière générale, le déplacement des panneaux de toit de la position repliée les uns au-dessus des autres vers la position escamotée dans le compartiment de coffre présente nécessairement des contraintes d'intégration en configuration cabriolet du véhicule.

Cette intégration des panneaux de toit repliés dans le compartiment de coffre constitue la principale difficulté des cinématiques actuelles et présente différents inconvénients.

En effet, certaines cinématiques lors du basculement des panneaux de toit dans le compartiment de coffre obligent l'utilisateur à retirer l'ensemble des bagages placés dans ce compartiment pour que les panneaux de toit en position repliée les uns au-dessus des autres puissent se loger dans le compartiment de coffre.

L'invention a pour but de proposer un véhicule automobile dont l'aspect peut être métamorphosé très rapidement, de la configuration berline en véhicule automobile découvrable ou en cabriolet et inversement et cela par des moyens simples à mettre en oeuvre, tout en conservant un volume du compartiment de coffre acceptable.

L'invention a donc pour objet un véhicule automobile du type découvrable comprenant un pavillon formé d'au moins deux panneaux rigides dont au moins un coulisse entre une position déployée de couverture de l'habitacle et une position repliée des panneaux superposés, découvrant ledit habitacle, où lesdits panneaux superposés sont déplaçables par pivotement par des moyens de commande entre la position repliée et une position escamotée sensiblement horizontale à la partie supérieure d'un compartiment de coffre et dans laquelle lesdits panneaux sont superposés de manière identique à la position repliée sans inversion de sens, les moyens de commande comprenant, de chaque côté du véhicule, un bras de pivotement à double articulation indépendante, caractérisé en ce que chaque axe de rotation des deux bras de pivotement est motorisé indépendamment de l'autre axe d'articulation.
- chaque bras de pivotement comporte une première extrémité articulée autour d'un axe de rotation avec un bras de support des panneaux repliés et une seconde extrémité articulée autour d'un axe de rotation sur la structure du véhicule,
- chaque bras de pivotement présente une forme convexe, et
- le pavillon comporte trois panneaux rigides.

Les caractéristiques et avantages de l'invention apparaîtront au cours de la description qui va suivre, donnée à titre d'exemple et faite en référence aux dessins annexés, sur lesquels :
- la Fig. 1 est une vue schématique en perspective d'un véhicule automobile, conforme à l'invention, et
- les Figs. 2 à 5 sont des vues schématiques montrant les différentes phases de déplacement des panneaux du pavillon du véhicule automobile représenté à la Fig. 1.

Dans ce qui suit, les orientations utilisées sont les orientations habituelles d'un véhicule automobile et les termes "avant" et "arrière" s'entendent par rapport au sens de marche normale du véhicule.

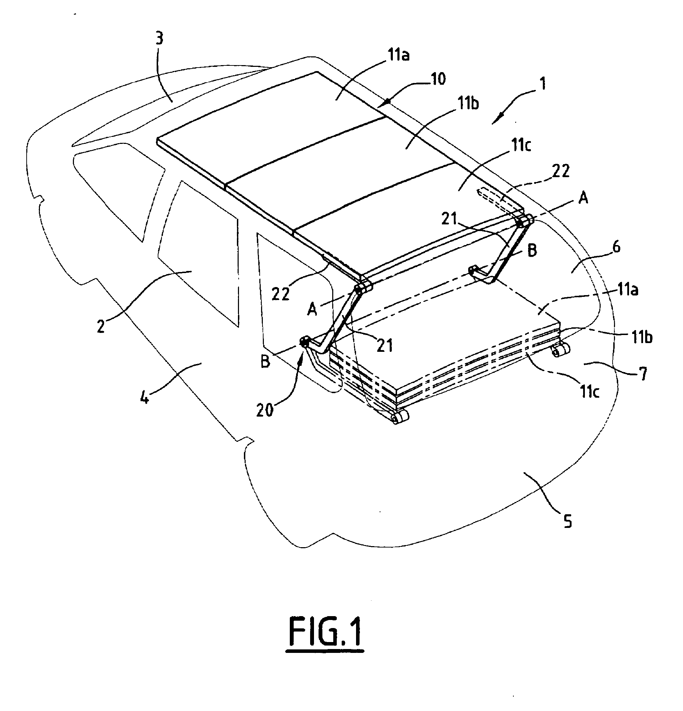

Sur la Fig. 1, on a représenté schématiquement un véhicule automobile désigné par la référence générale 1 et qui comporte un habitacle 2, délimité, entre autres, à sa partie avant, par un pare-brise 3, de chaque côté, par un panneau latéral 4, à sa partie arrière, par un panneau de coffre 5 surmonté par une lunette arrière 6 et, à sa partie supérieure, par un pavillon désigné dans son ensemble par la référence 10.

Le véhicule automobile comporte également, à sa partie arrière, un compartiment de coffre 7 délimité par les dossiers d'une rangée de sièges arrière, non représentée, et par le panneau de coffre 5.

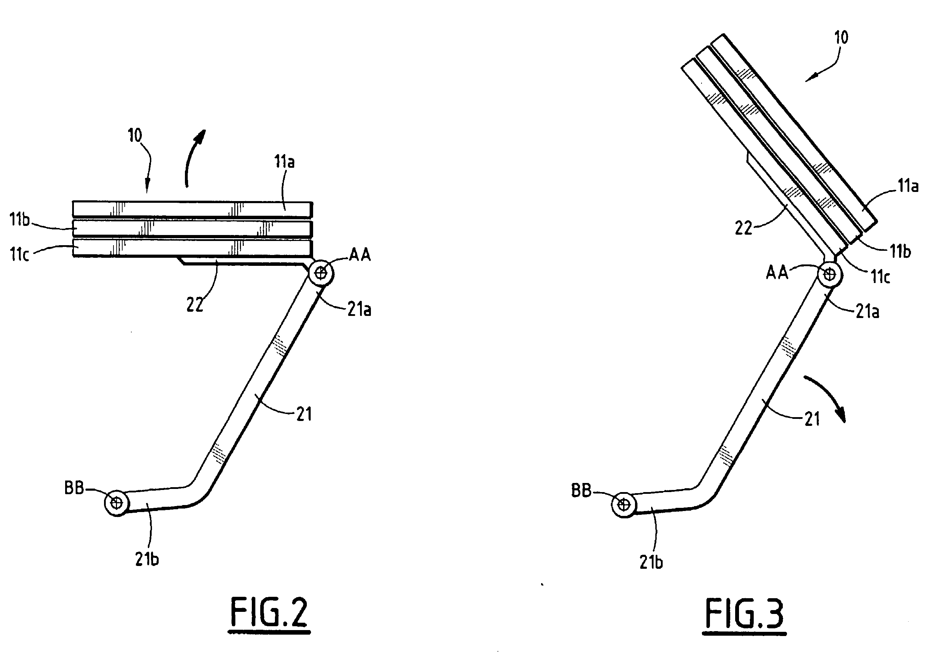

Le pavillon 10 est formé d'au moins deux panneaux rigides, par exemple en verre, et dans le mode de réalisation représenté sur les figures, le pavillon 10 est formé de trois panneaux de toit, respectivement un panneau avant 11a, un panneau intermédiaire 11b et un panneau arrière 11c. Les panneaux avant 11a et intermédiaire 11b, sont déplaçables par des moyens appropriés de type connu, non représentés, entre une position déployée dans laquelle les panneaux 11a, 11b et 11c sont placés les uns à la suite des autres de façon à couvrir l'habitacle 2 (Fig. 1) et une position escamotée dans laquelle les panneaux 11a, 11b et 11c sont superposés (Fig. 2) découvrant ainsi l'habitacle 2. Dans cette position repliée, les panneaux 11a, 11b et 11c sont placés les uns au-dessus des autres, le panneau avant 11a étant au-dessus, le panneau intermédiaire 11b étant au milieu et le panneau arrière 11c étant au-dessous de l'empilement.

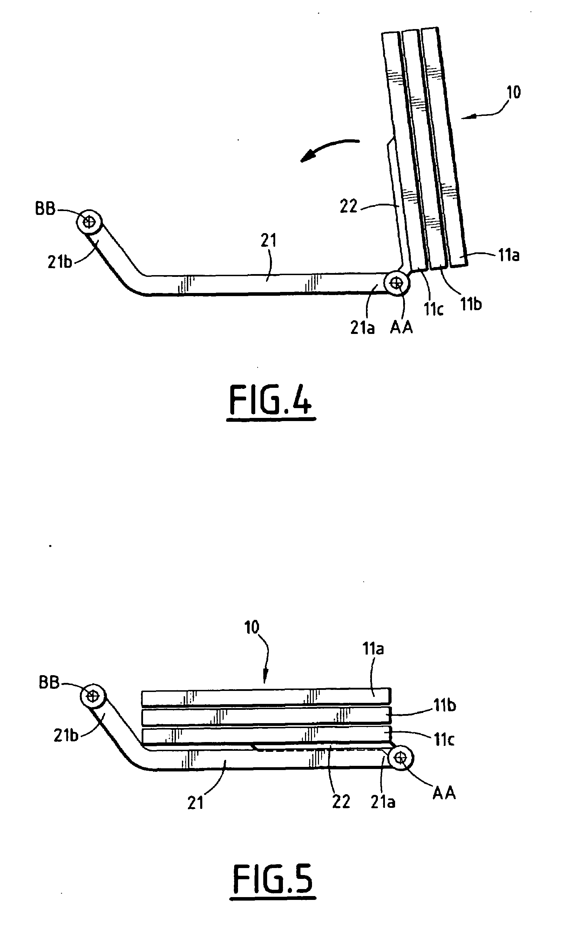

Les panneaux 11a, 11b et 11c superposés sont déplaçables par pivotement par des moyens 20 de commande entre la position repliée, comme montrée à la Fig. 2, et une position escamotée sensiblement horizontale à la partie supérieure du compartiment de coffre 7, comme montrée en pointillés à la Fig. 1, ainsi que sur la Fig. 5. Dans la position escamotée, les panneaux 11a, 11b et 11c sont superposés de manière identique à la position repliée, sans inversion de sens. Ainsi, dans cette position, le panneau avant 11a est au-dessus, le panneau intermédiaire 11b est au milieu et le panneau arrière 11c est au-dessous de l'empilement.

D'une manière générale, les moyens 20 de commande comprennent, de chaque côté du véhicule, un bras de pivotement 21 à double articulation indépendante.

Ainsi que montré sur la Figs. 1 et 2, chaque bras de pivotement 21 comporte une première extrémité 21a articulée autour d'un axe de rotation AA avec un bras de support 22 des panneaux 11a, 11b et 11c repliés et une seconde extrémité 21 b articulée autour d'un axe de rotation BB sur la structure du véhicule automobile.

De préférence, chaque bras de pivotement 21 présente une forme convexe.

L'entraînement des axes de rotation AA et BB est assuré de façon motorisée par l'assistance d'un moteur électrique, non représenté. Ces axes de rotation AA et BB sont entraînés indépendamment l'un de l'autre.

Pour découvrir la partie supérieure de l'habitacle 2, un utilisateur procède de la façon suivante.

Tout d'abord, il commande le déplacement des panneaux avant 11a et intermédiaire 11b pour les amener en position repliée dans laquelle ces panneaux avant 11a et intermédiaire 11b sont superposés sur le panneau arrière 11c, comme montré à la Fig. 2.

Pour transformer le véhicule automobile en cabriolet, l'utilisateur commande, dans un premier temps, la rotation de l'axe de rotation AA disposé entre les bras de pivotement 21 et les bras de support 22 ce qui a pour effet de faire pivoter vers le haut l'empilement de panneaux 11a, 11b et 11c, ainsi que représenté à la Fig. 3.

Ensuite, l'axe de rotation BB disposé entre les bras de pivotement 21 et la structure du véhicule, est entraîné provoquant le pivotement vers le bas, c'est à dire vers le compartiment de coffre 7 de l'ensemble constitué par les deux bras de pivotement 21 et des deux bras de support 22 de l'empilement des panneaux 11a, 11b et 11c, comme représenté à la Fig. 4.

Ensuite, l'axe de rotation AA est entraîné afin de faire pivoter dans une position sensiblement horizontale les deux bras de support 22 et l'empilement des panneaux 11a, 11b et 11c, comme montré à la Fig. 5. Dans cette position, l'empilement des panneaux 11a, 11b et 11c est escamoté à la partie supérieure du compartiment de coffre 7 et ces panneaux 11a, 11b et 11c sont superposés de manière identique à la position repliée.

Pour le déploiement des panneaux 11a, 11b, 11c de cette position escamotée vers la position déployée de couverture de l'habitacle, la cinématique inverse du déplacement de ces panneaux de toit est effectuée.

Grâce aux deux axes de rotation indépendants, la cinématique ainsi mise en oeuvre permet au début du déplacement des panneaux 11a, 11b et 11c superposés vers la position escamotée à la partie supérieure du compartiment de coffre 7, de se dégager des appuis d'étanchéité sans effet de cisaillement contrairement aux cinématiques utilisées jusqu'à présent.

Cette cinématique est particulièrement simple à mettre en oeuvre et elle tient compte de l'environnement et de la place disponible à la partie supérieure du compartiment de coffre.

Enfin, cette cinématique permet d'éviter à un utilisateur de retirer les bagages préalablement disposés dans le compartiment de coffre si il désire utiliser son véhicule en cabriolet.

Le véhicule automobile selon l'invention présente l'avantage de pouvoir être très rapidement transformé de la configuration berline en véhicule découvrable ou en cabriolet et inversement et de pouvoir disposer d'un compartiment de coffre présentant un volume tout à fait acceptable dans la configuration cabriolet.

## Revendications

1. Véhicule automobile du type découvrable comprenant un pavillon (10) formé d'au moins deux panneaux (11a, 11b, 11c) rigides dont au moins un coulisse entre une position déployée de couverture de l'habitacle (2) et une position repliée des panneaux (11a, 11b, 11c) superposés, lesdits panneaux (11a, 11b, 11c) superposés étant déplaçables, par pivotement, par des moyens (20) de commande entre la position repliée et une position escamotée sensiblement horizontale à la partie supérieure d'un compartiment de coffre (7) et dans laquelle lesdits panneaux (11a, 11b, 11c) sont superposés de manière identique à la position repliée sans inversion de sens, les moyens (20) de commande comprenant, de chaque côté du véhicule, un bras de pivotement (21) à double articulation indépendante, **caractérisé en ce que** chaque axe de rotation des deux bras de pivotement (21) est motorisé indépendamment de l'autre axe de rotation.

2. Véhicule automobile selon la revendication 1, **caractérisé en ce que** chaque bras de pivotement (21) comporte une première extrémité (21a) articulée autour d'un axe de rotation avec un bras de support (22) des panneaux (11a, 11b, 11c) repliés et un seconde extrémité (21b) articulée autour d'un axe de rotation sur la structure du véhicule.

3. Véhicule automobile selon la revendication 1 ou 3, **caractérisé en ce que** chaque bras de pivotement (21) présente une forme convexe.

4. Véhicule automobile selon l'une quelconque des revendications précédentes, **caractérisé en ce que** le pavillon (10) comporte trois panneaux (11a, 11b, 11c) rigides.

## Claims

1. A Motor vehicle of the convertible type, comprising a roof (10) formed by at least two rigid panels (11a, 11b, 11c), at least one of which slides between an extended position for covering the passenger compartment (2) and a folded position for the superimposed panels (11a, 11b, 11c), said superimposed panels (11a, 11b, 11c) being pivotally movable by control means (20) between the folded position and a substantially horizontal retracted position at the top part of a luggage compartment (7) and in which said panels (11a, 11b, 11c) are superimposed in an identical manner to the folded position without any reversal of direction, the control means (20) comprising, on each side of the vehicle, a pivoting arm (21) with double independent jointing, **characterised in that** each rotation axis of the two pivoting arms (21) is motorised independently of the other rotating axis.

2. The motor vehicle according to claim 1, **characterised in that** each pivoting arm (21) comprises a first end (21a) jointed about a rotation axis with a support arm (22) for the folded panels (11a, 11b, 11c) and a second end (21b) jointed about a rotation axis on the structure of the vehicle.

3. The motor vehicle according to claim 1 or 2, **characterised in that** each pivoting arm (21) has a convex shape.

4. The motor vehicle according to any one of the preceding claims, **characterised in that** the roof (10) comprises three rigid panels (lla, 11b, 11c).

## Patentansprüche

1. Kraftfahrzeug mit Klappdach, umfassend ein Verdeck (10), das aus mindestens zwei steifen Platten (11a, 11b, 11c) gebildet wird, von denen mindestens eine zwischen einer ausgeklappten Stellung zum Abdecken des Fahrgastraums (2) und einer eingeklappten Stellung der überlagerten Platten (11a, 11b, 11c) gleitet, wobei die überlagerten Platten (11a, 11b, 11c) durch Verschwenken über Betätigungsmittel (20) zwischen der eingeklappten Stellung und einer eingezogenen Stellung, die zu dem oberen Teil eines Kofferraums (7) im Wesentlichen waagerecht ist und in der die Platten (11a, 11b, 11c) wie in der eingeklappten Stellung ohne Richtungsumkehrung überlagert sind, bewegbar sind, wobei die Betätigungsmittel (20) auf jeder Seite des Fahrzeugs einen Schwenkarm (21) mit unabhängigem doppelten Gelenk umfassen, **dadurch gekennzeichnet, dass** jede Drehachse der beiden Schwenkarme (21) unabhängig von der anderen Drehachse motorisiert ist.

2. Kraftfahrzeug nach Anspruch 1, **dadurch gekennzeichnet, dass** jeder Schwenkarm (21) ein erstes Ende (21a), das um eine Drehachse herum mit einem Tragarm (22) der eingeklappten Platten (11a, 11b, 11c) angelenkt ist, und ein zweites Ende (21b), das um eine Drehachse auf dem Aufbau des Fahrzeugs angelenkt ist, umfasst.

3. Kraftfahrzeug nach Anspruch 1 oder 2, **dadurch gekennzeichnet, dass** jeder Schwenkarm (21) eine konvexe Form aufweist.

4. Kraftfahrzeug nach einem der vorhergehenden Ansprüche, **dadurch gekennzeichnet, dass** das Verdeck (10) drei steife Platten (11a, 11b, 11c) umfasst.
